# EUROPEAN PATENT APPLICATION

(11) **EP 1 418 531 A2**
(43) Date of publication of application: **12.05.2004**
(21) Application number: 03025032.8
(22) Date of filing: 30.10.2003
(51) Int. Cl.: G06K 9/72, G06K 9/03, H04M 1/2755

(54) **Portable cellular phone provided with character recognition function, method and program for correcting incorrectly recognized character**

(30) Priority: 31.10.2002 JP 2002316925
(71) Applicant: NEC CORPORATION, Tokyo (JP)
(72) Inventor: Kubota, Akihito, Kamikawamachi Kodama-gun Saitama (JP)
(74) Representative: Betten & Resch

(57) **Abstract**

An optical portable cellular phone having a character recognition function is provided which is capable of reducing a rate of character recognition error or a rate of character recognition failure in case of reading a character string (1). When a character recognizing section (3) judges a captured character to be unrecognizable (misread or unreadable), a data referencing section (4) judges whether or not incorrect character code due to the unrecognizable character corresponds to any one of feature character strings, referring to information about the feature character strings stored in a memory (7) . When it is judged that the incorrect character code corresponds to any one of the feature character strings, a data correcting section (5) corrects in a manner that a form of the incorrect character code matches up with that of the feature character string.

## Description

### BACKGROUND OF THE INVENTION

### Field of the Invention

The present invention relates to a portable cellular phone having a character recognition function, and a method and a program for an incorrectly recognized (misread) character, and more particularly to an improvement of a method for correcting a character judged to be recognition error or recognition failure in a portable cellular phone provided with an optical character recognition function.

The present application claims priority of Japanese Patent Application No. 2002-316925 filed on October 31, 2002, which is hereby incorporated by reference.

### Description of the Related Art

In case of a conventional optical character recognizing device, a character of a medium is read by a video capturing section (scanner), a image data being read is transmitted to a character recognizing section, and image of character is recognized one by one there. Moreover a result being recognized is output to a display device. AS proceeding works like above, when the result of recognition by the character recognizing section is judged to be recognition error or recognition failure, an operator has to delete an misread character or a unreadable character by a keyboard and to input a character newly. As a correcting method, one method is inputting kana-kanji transform by the keyboard and an other method is inputting by displaying a candidate character or a candidate word. However, with the conventional character recognition technology, there are still many characters being misread or unreadable, and therefore the operator has to delete and re-input the misread character or the unreadable character every time.

On the other hand, examples of a technology for correcting recognized data have been disclosed in Japanese Patent Application Laid-open No. Hei05-250515 (hereinafter referred to as patent reference No. 1), and Japanese patent Application Laid-open No. Hei09-0166872 (hereinafter referred to as patent reference No. 2).

The technology disclosed in the patent reference No. 1 is related with recognition of barcode character of text on a check or a like, that is, recognition the barcode character using character shape information (template pattern).

And the technology disclosed in the patent reference No. 2 is related with correction form data, that is, correction the form data applying correcting process pattern corresponding to the form data.

In case of the conventional optical character recognizing device mentioned above, when the result of recognition by the character recognizing section is judged to be recognition error or recognition failure, the operator has to delete the misread character or the unreadable character each time by the keyboard and to input a corrected character newly. That is, there has been a problem that time is required for character correcting.

### SUMMARY OF THE INVENTION

In view of the above, it is an object of the present invention to provide a portable cellular phone having an optical character recognition function, and a method and a program for an incorrectly recognized (misread) character, each of which is capable of reducing a rate of character recognition error or a rate of character recognition failure in case of reading a character string.

According to a first aspect of the present invention, there is provided a portable cellular phone provided with a character recognition function including:
an image capturing means for capturing at least character string;
a character recognizing means for recognizing the character string captured from the image capturing means; and
a character string storage means for storing information about feature character strings, and
wherein when the captured character string has been incorrectly recognized, the character recognizing means corrects the incorrectly recognized character string, based on the information about feature character strings read from the character string storage means.

In the foregoing, a preferable mode is one wherein when at least one misread or unreadable character is included in the captured character string, the character recognizing means corrects the incorrectly recognized character string, based on the information about feature character strings read from the character string storage means.

Another preferable mode is one wherein the character recognizing means includes:
a character recognizing section for recognizing each of characters making up the character string captured from the image capturing means,
a data referencing section for comparing a part of the character string recognized incorrectly as a whole in the character recognizing section with the information about feature character strings stored in the character string storage means, and
a data correcting section for correcting the incorrectly recognized character string, such that a form of the incorrectly recognized character string may match up with that of any one of the feature character strings based on the result of comparison obtained by the processing of the data referencing section.

Still another preferable mode is one wherein the character recognizing means includes:
a character recognizing section for recognizing each of characters making up the character string captured from the image capturing means,
a data referencing section for comparing a part of the character string incorrectly recognized as a whole, wherein at least one misread or unreadable character is included, in the character recognizing section with the information about feature character strings stored in the character string storage means, and
a data correcting section for correcting the misread or unreadable character, so as to match up with a form of any one of the feature character strings based on the result of comparison obtained by the processing of the data referencing section.

An additional preferable mode is one wherein the information about feature character string includes at least any one of information about a URL (Uniform Resource Locator) , a phone number, and a mail address.

According to a second aspect of the present invention, there is provided a method for correcting an incorrectly recognized character string, used in a portable cellular phone provided with a character recognition function, the method including:
an image capturing step of capturing at least character string from an image capturing means; and
a data recognizing/correcting step of recognizing the character string captured from the image capturing means, and when the captured character string has been incorrectly recognized, correcting the incorrectly recognized character string, based on information about feature character strings.

According to a third aspect of the present invention, there is provided a program for causing a computer to execute a method for correcting an incorrectly recognized character string, used in a portable cellular phone provided with a character recognition function, the method including;
an image capturing step of capturing at least character string from an image capturing means; and
a data recognizing/correcting step of recognizing the character string captured from the image capturing means, and when the captured character string has been incorrectly recognized, correcting the incorrectly recognized character string, based on information about feature character strings.

With the above configuration, by including a step to correct captured character string based on the result of comparing information of the captured character string with information about the feature character strings, it becomes possible to reduce the rate of character recognition error and the rate of character recognition failure in case of reading a character string.

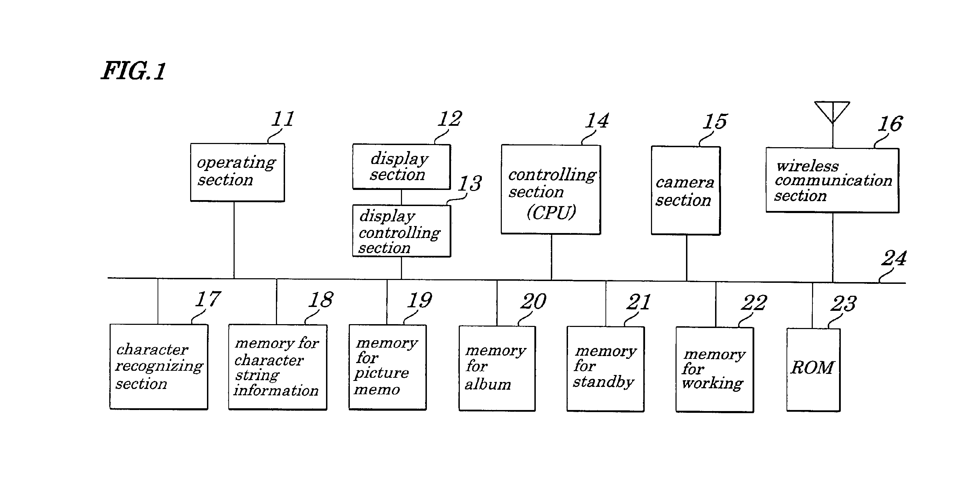

In the technologies disclosed in the patent references No. 1 and No. 2, feature character string information is not used as the template pattern as disclosed in the Patent reference No. 1 (see Fig.1) or the correcting process pattern as disclosed in the patent reference No. 2 (see Fig.1), so a structure, an action, and an effect of the technologies disclosed in the patent references No. 1 and No. 2 are quite different from those of the present invention.

### BRIEF DESCRIPTION OF THE DRAWINGS

The above and other objects, advantages, and features of the present invention will be more apparent from the following description taken in conjunction with the accompanying drawings in which:
Fig. 1 is a diagram showing configuration of a portable cellular phone having an optical character recognition function according to a first embodiment of the present invention;
Fig. 2 is a schematic illustration showing flow of a process of character recognition and data correction according to the first embodiment of the present invention;
Fig. 3 is a diagram illustrating one example of information stored in a memory 7 according to the present invention; and
Fig. 4 is a flow chart showing one example of a movement of the portable cellular phone having the optical character recognition function according to the present invention.

### DETAILED DESCRIPTION OF THE PREFERRED EMBODIMENTS

Best modes of carrying out the present invention will be described in further detail using various embodiments with reference to the accompanying drawings.

### First Embodiment

Figure 1 is a block diagram for showing an electric configuration of a portable cellular phone having an optical character recognition function according to a first embodiment of the present invention. As shown in the same figure, the portable cellular phone of this embodiment is mainly made up of an operating section 11, a display section 12, a display controlling section 13, a controlling section (CPU; Central Processing Unit) 14, a camera section 15, a wireless communication section 16, a character recognition section 17, a memory for character string information 18, a memory for picture memo 19, a memory for album 20, a memory for standby 21, a memory for working 22, a ROM (Read-Only Memory) 23, and a bus 24.

The operating section 11 is made up of an input device with which various kinds of keys are provided, the display section 12 is provided by, for example, an LCD (Liquid Crystal Display) , and the display controlling section 13 controls the display section 12. The controlling section 14 is made up of a CPU and controls each section through the bus 24. The camera section 15 takes a picture of an external subject, especially a picture including information about character string, as it is a subject of the present invention. The wireless communication section 16 performs wireless communications with the other user's device via a base station (not shown).

The character recognition section 17 recognizes character taken a picture by the camera section 15. The memory for character string information 18 stores character string information, which will be mentioned later. The memory for picture memo 19 is a memory to register a taken image as a memo, the memory for album 20 is a memory to store the taken image by the camera section 15 for an album, the memory for standby 21 is a memory for storing a standby screen, the memory for working 22 is a work memory in a process of the CPU 14, and the ROM 23 is a memory stored a program to execute the CPU 14 for recognizing. Each of theses sections (except the display section 12) is interconnected through the bus 24.

As mentioned above, the portable cellular phone of the present invention is equipped with the camera section 15 and has a function of taking and storing the outside video through the camera section 15. But the features of the present invention are a function of taking a picture of character string through the camera section 15 and of recognizing the character string and a function of correcting data. Therefore the following description of these functions of character recognition and of data correction will be done, and the description of other functions will be omitted.

Further, in the case of the first embodiment the camera section 15 is used for capturing video, it is possible to equip capturing device, for example OCR (Optical Character Reader) or a like, according to capture information about the character string separately.

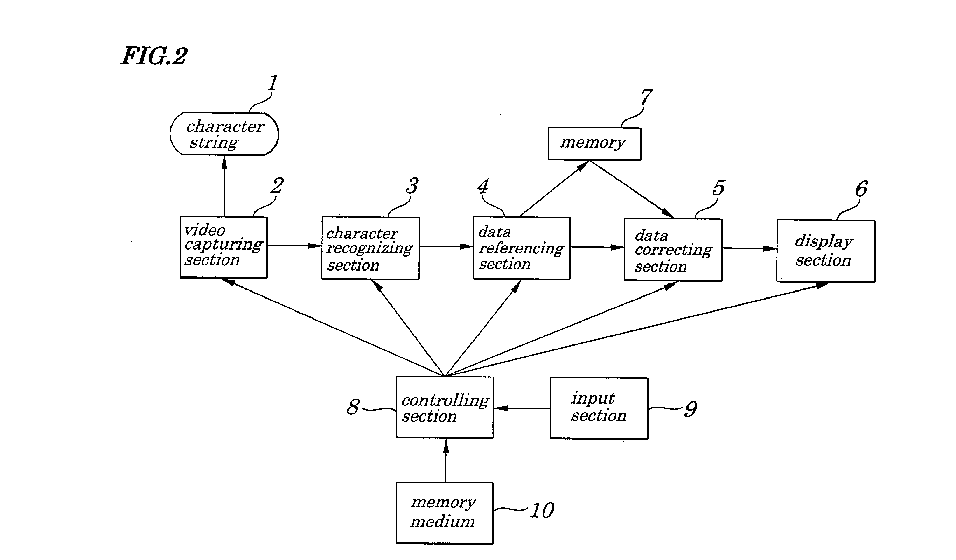

Fig. 2 is a schematic illustration showing flow of a process of character recognition and data correction according to the first embodiment. In Fig. 2, a character string 1 means a picture, as an object to be read.

Referencing to Fig. 2, a video capturing section 2 digitizes the character string 1 and send it to a character recognizing section 3 as image data. The character recognizing section 3 recognizes character with the image data and inputs the character code to a data referencing section 4. The data referencing section 4 compares the character code sent with information stored in a memory 7. A data correcting section 5 corrects data according to information from the data referencing section 4. A display section 6 displays information sent from the data correcting section 5. A controlling section 8 controls the video capturing section 2, the character recognizing section 3, the data referencing section 4, the data correcting section 5, and the display section 6. An input section 9 is in a shape of keyboard or button and corrects and chooses by manual operation. The program will be described later is stored in a memory medium 10.

More, the character recognizing section 3, the data referencing section 4, and the data correcting section 5 in Fig. 2 make up the character recognition section 17 in Fig. 1.

And in Fig. 2 the video capturing section 2, the display section 6, the memory 7, the controlling section 8, the input section 9, and the memory medium 10 are corresponding to the camera section 15, the display section 12, the memory for character string information 18, the controlling section 14, the operating section 11, and the ROM 23 shown in Fig.1 respectively.

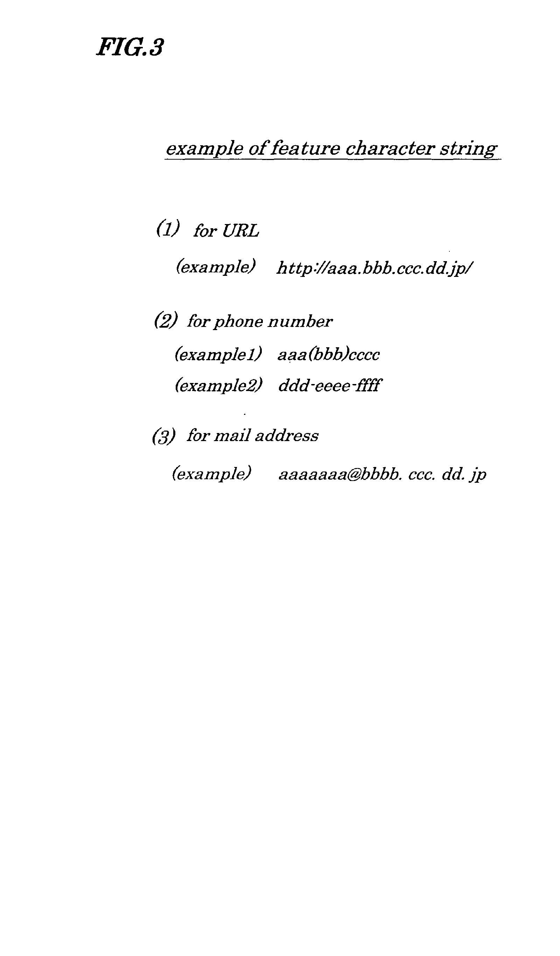

Next, information stored in the memory section 7 is described. Fig. 3 is a diagram illustrating one example of information stored in a memory 7 according to the present invention. As shown in Fig. 3 information about feature character string is stored in the memory section 7.

For instance, in a case that a URL (Uniform Resource Locators) is considered as the feature character string, "http://aaa.bbb.ccc.dd.jp/" as one example is stored in the memory section 7 as information about the feature character string.

And in a case that a phone number is considered as the feature character string, "aaa(bbb)cccc" or "ddd-eeee-ffff" as one example is stored in the memory section 7 as information of the feature character string.

Further more in a case that an e-mail address is considered as the feature character string, "aaaaaaa@bbbbb.ccc.dd.jp" as one example is stored in the memory section 7 as information of the feature character string.

Here, information about the feature character string is not limited to the information mentioned above, private information such as a credit card number, a car plate number, a car license number, a passport number, or a like, may be also used as the feature character string.

That is, when the data referencing section 4 has judged that illegal/ misread character code input from the character recognizing section 3 applies to any one of the feature character strings, the data correcting section 5 corrects the illegal/ misread character code such that a form of the illegal/ misread character code may match up with that of the applied feature character string.

Moreover, the character recognizing section 3, the data referencing section 4, and the data correcting section 5, each are made up of software.

### Second Embodiment

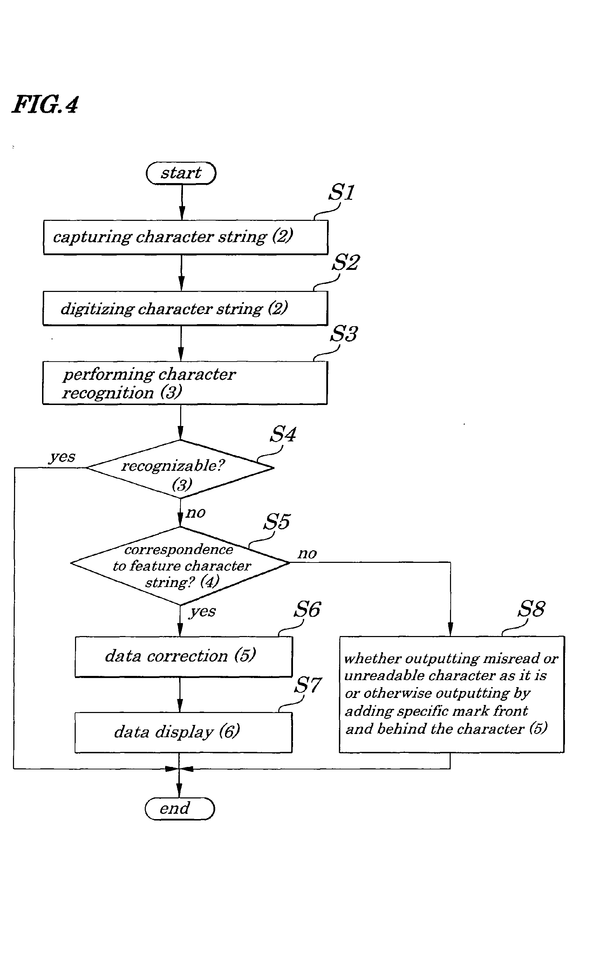

Next, a second embodiment of the present invention will be described as below. The second embodiment is related to a method of correcting recognized character. Fig. 4 is a flow chart showing one example of a movement of the portable cellular phone having the optical character recognition function according to the present invention. Further, the composition of the portable cellular phone having the optical character recognition function according is same as the composition shown in Figs. 1 and 2.

As shown in Fig. 4, at first, a character string 1 is captured in a video capturing section 2 (S1) and the captured character string 1 is digitized (S2). Next the digitized character string 1 is input to a character recognizing section 3 and processing of recognizing characters included in the digitized character string 1 is performed (S3) . When the character recognizing section 3 has judged that the object character is recognizable in processing of S3 (in a case of " possible" in S4), the recognized character code is input in a display section 6, and the display section 6 as a result, displays the recognized character, based on the input character code (S7).

On the other hand, when the character recognizing section 3 has judged that the object character is unrecognizable in processing of S3 (that is, when the character recognizing section 3 has judged the object character to be misread or unreadable) (in a case of " impossible" in S4), character code corresponding to a part of the character string recognized incorrectly as a whole, is transferred to a data referencing section 4. The data referencing section 4 read information about the feature character strings stored in a memory 7 and judges whether or not the incorrect character code corresponds to any one of the feature character strings, referencing to the read feature character strings (S5).

Next, the method of judging whether or not the incorrect character code matches up with a form of any one of the feature character strings will be described. For example, when the character recognizing section 3 has read a character string of ┌http┘ or ┌://┘ from among the captured character string 1, the character recognizing section 3 judges the captured character string 1 to be any URL. In another example, the character recognizing section 3 has read 10-digit numeric character string or 11-digit numeric character string from among the captured character string 1, the character recognizing section 3 judges the captured character string 1 to be any phone number. Furthermore, when the character recognizing section 3 has read () (bracket) or - (hyphen) from among the numeric character string, the character recognizing section 3 judges the captured character string 1 to be any phone number. In still another example, when the character recognizing section 3 has read @ from among the captured character string 1, or the character string terminating at ┌.jp┘, the character recognizing section 3 judges the captured character string 1 to be any mail address.

Back to the flow chart of Fig. 4, when the data referencing section 4 judges that the incorrect character code due to the unrecognizable character corresponds to any one of the feature character strings in processing of S5 (in a case of ┌yes┘ in S5), the data correcting section 5 corrects the incorrect character code in a manner that a form of the incorrect character code matches up with that of the feature character string (S6).

For example, it is judged that the captured character string 1 to be any URL, a misread or unreadable character can be considered to be alphabet, not to be numeric, Kanji and Kana. Thus, the misread or unreadable character is changed to the most preferable candidate in alphabets. In another example, it is judged that the captured character string 1 to be any phone number, a misread or unreadable character can be considered to be numeric, not to be alphabet, Kanji and Kana. Thus, the misread or unreadable character is changed to the most preferable candidate in numbers.

And the display section 6 displays a character string corresponding to the corrected character code (S7).

On the other hand, when the data referencing section 4 judges that the incorrect character code does not correspond to any one of the feature character strings in processing of S5 (in a case of ┌no┘ in S5), the data correcting section 5 outputs incorrect (illegal) character just as it is without correcting, or outputs adding a specified mark (sign) before and after recognition error or recognition failure (S8) . And the not corrected character code is displayed in the display section 6 (S7). Further more, adding the specified mark (sign) before and after recognition error or recognition failure and output it, it causes the operator to find recognition error or recognition failure easy to correct character.

### Third Embodiment

Next, third embodiment of the present invention will be described. The third embodiment is related to a program of correcting recognized character. As mentioned above, a portable cellular phone provided with an optical character recognition function of the invention includes a memory medium 10 (as shown in Fig. 2). The memory medium 10 sores a program of correcting method for recognized character being showed in a flow chart in Fig. 4. A controlling section 8 reads this program from the memory medium 10 and controls a video capturing section 2, a character recognizing section 3, a data referencing section 4, a data correcting section 5, and a display section 6 according to the program. The content of controlling has been described in the case of the second embodiment already, so the description about the third embodiment is omitted.

Of course, combination of the above embodiments can be envisaged.

In summary, an embodiment of the present invention can be described as follows:

An optical portable cellular phone having a character recognition function is provided which is capable of reducing a rate of character recognition error or a rate of character recognition failure in case of reading a character string (1). When a character recognizing section (3) judges a captured character to be unrecognizable (misread of unreadable), a data referencing section (4) judges whether or not incorrect character code due to the unrecognizable character corresponds to any one of feature character strings, referring to information about the feature character strings stored in a memory (7). When it is judged that the incorrect character code corresponds to any one of the feature character strings, a data correcting section (5) corrects in a matter that a form of the incorrect character code matches up with that of the feature character string.

## Claims

1. A portable cellular phone provided with a character recognition function comprising:
an image capturing means (2) for capturing a character string (1);
a character recognizing means (17) for recognizing the character string (1) captured from said image capturing means (2) ; and
a character string storage means (7, 18) for storing information about feature character strings, and
wherein when the captured character string (1) has been incorrectly recognized, said character recognizing means (17) corrects the incorrectly recognized character string, based on said information about feature character strings read from said character string storage means (7, 18).

2. The portable cellular phone provided with a character recognizing function according to Claim 1, **characterized in that** when at least one misread or unreadable character is included in the captured character string (1), said character recognizing means (17) corrects the incorrectly recognized character string, based on said information about feature character strings read from said character string storage means (7, 18).

3. The portable cellular phone provided with a character recognition function according to Claim 2, **characterized in that** said character recognizing means (17) comprises:
a character recognizing section (3) for recognizing each of characters making up the character string (1) captured from said image capturing means (2),
a data referencing section (4) for comparing a part of the character string recognized incorrectly as a whole in said character recognizing section (3) with said information about feature character strings stored in said character string storage means (7, 18), and
a data correcting section (5) for correcting the incorrectly recognized character string, such that a form of the incorrectly recognized character string may match up with that of any one of said feature character strings based on the result of comparison obtained by the processing of said data referencing section (4).

4. The portable cellular phone provided with a character recognition function according to Claim 2, **characterized in that** said character recognizing means (17) comprises:
a character recognizing section (3) for recognizing each of characters making up the character string (1) captured from said image capturing means (2),
a data referencing section (4) for comparing a part of the character string incorrectly recognized as a whole, wherein at least one misread or unreadable character is included, in said character recognizing section (3) with said information about feature character strings stored in said character string storage means (7, 18), and
a data correcting section (5) for correcting the misread or unreadable character, so as to match up with a form of any one of said feature character strings based on the result of comparison obtained by the processing of said data referencing section (4).

5. The portable cellular phone provided with a character recognition function according to any one of Claims 1 to 4, **characterized in that** said information about feature character string includes at least any one of information about a URL (Uniform Resource Locator), a phone number, and a mail address.

6. A method for correcting an incorrectly recognized character string, used in a portable cellular phone provided with a character recognition function, said method comprising:
an image capturing step of capturing a character string (1) from an image capturing means (2); and
a data recognizing/correcting step of recognizing the character string (1) captured from said image capturing means (2) , and when the captured character string (1) has been incorrectly recognized, correcting the incorrectly recognized character string, based on information about feature character strings.

7. The method for correcting an incorrectly recognized character, according to Claim 6,
**characterized in that** in said data recognizing/correcting step, when at least one misread or unreadable character is included in the recognized character string, correcting the incorrectly recognized character string, based on information about feature character strings.

8. The method for correcting an incorrectly recognized character, according to Claim 7, **characterized in that** said data recognizing / correcting step includes steps of:
a first step of recognizing for recognizing each of characters making up the character string (1) captured from said image capturing means (2);
a second step of comparing a part of the character string recognized incorrectly as a whole in said first step with said information about said feature character strings;
a third step of for correcting the incorrectly recognized character string, such that the a form of the incorrectly recognized character string may match up with that of any one of said feature character strings based on the result of comparison obtained in said second step; and
a fourth step of displaying the corrected character string in said third step.

9. The method for correcting an incorrectly recognized character, according to Claim 7, **characterized in that** said data recognizing / correcting step includes steps of:
a first step of recognizing for recognizing each of characters making up the character string (1) captured from said image capturing means (2);
a second step of comparing a part of the character string recognized incorrectly as a whole, wherein at least one misread or unreadable character is included, in said first step with said information about said feature character strings;
a third step of for correcting the misread or unreadable character, so as to match up with a form of any one of said feature character strings based on the result of comparison obtained in said second step; and
a fourth step of displaying the corrected character in said third step.

10. The method for correcting an incorrectly recognized character, according to any one of Claims 6 to 9, **characterized in that** said information about feature character string includes at least any one of information about a URL (Uniform Resource Locator), a phone number, and a mail address.

11. A program for causing a computer to execute a method for correcting an incorrectly recognized character string, used in a portable cellular phone provided with a character recognition function, said method comprising;
an image capturing step of capturing a character string (1) from an image capturing means (2); and
a data recognizing/correcting step of recognizing the character string (1) captured from said image capturing means (2), and when the captured character string (1) has been incorrectly recognized, correcting the incorrectly recognized character string, based on information about feature character strings.

12. The program for causing a computer to execute the method for correcting an incorrectly recognized character, according to Claim 11, **characterized in that** said data recognizing / correcting step comprises:
a first step of recognizing for recognizing each of characters making up the character string (1) captured from said image capturing means (2);
a second step of comparing a part of the character string recognized incorrectly as a whole in said first step with said information about said feature character strings;
a third step of for correcting the incorrectly recognized character string, such that the a form of the incorrectly recognized character string may match up with that of any one of said feature character strings based on the result of comparison obtained in said second step; and
a fourth step of displaying the corrected character string in said third step.

13. The program for causing a computer to execute the method for correcting an incorrectly recognized character, according to Claim 11, wherein said data recognizing/correcting step comprises:
a first step of recognizing for recognizing each of characters making up the character string (1) captured from said image capturing means (2);
a second step of comparing a part of the character string recognized incorrectly as a whole, wherein at least one misread or unreadable character is included, in said first step with said information about said feature character strings;
a third step of for correcting the misread or unreadable character, so as to match up with a form of any one of said feature character strings based on the result of comparison obtained in said second step; and
a fourth step of displaying the corrected character in said third step.

14. The program for causing a computer to execute the method for correcting an incorrectly recognized character, according to any one of Claims 11 to 13, **characterized in that** said information about feature character string includes at least any one of information about a URL (Uniform Resource Locator) , a phone number, and a mail address.
